# EUROPEAN PATENT APPLICATION

(11) **EP 4 592 074 A1**
(43) Date of publication of application: **30.07.2025**
(21) Application number: 25151875.9
(22) Date of filing: 14.01.2025
(51) Int. Cl.: B32B 18/00, C04B 35/80, C04B 37/00, C04B 38/00

(54) **CERAMIC MATRIX COMPOSITE SANDWICH STRUCTURE AND METHOD OF MANUFACTURE**

(30) Priority: 22.01.2024 US 202418419275
(71) Applicant: Spirit AeroSystems, Inc., Wichita, KS 67210-0008 (US)
(72) Inventor: DOAN, Thu, Wichita, 67210 (US); THIND, Jagjeevan, Wichita, 67210 (US)
(74) Representative: HGF

(57) **Abstract**

In one aspect, a ceramic matrix composite sandwich structure has a ceramic honeycomb core structure, a first face sheet on a first surface of the ceramic honeycomb core structure, and a second face sheet on a second surface of the ceramic honeycomb core structure. Methods of preparing the ceramic matrix composite sandwich structure involve applying ceramic matrix composite prepregs to a honeycomb core to form an unbonded sandwich structure, subjecting the unbonded sandwich structure to an autoclave process to form an intermediate bonded sandwich structure, and subjecting the intermediate bonded sandwich structure to a sintering process to produce the ceramic matrix composite sandwich structure.

## Description

### FIELD

The present disclosure is directed to a ceramic matrix composite sandwich structure and methods of manufacturing a ceramic matrix composite sandwich structures.

### BACKGROUND

Ceramic matrix composite materials comprise ceramic fibers embedded in a ceramic matrix. Ceramic matrix composite materials have a wide array of applications (heat shields, gas turbines, brake disks, etc.) and may be used in certain environments that require heightened stiffness, bending strength, high temperature resistance, and vibration resistance, etc. Currently, the solution for increasing ceramic matrix composite bending strength and/or component stiffness is to use multiple plies of ceramic matrix composite material in a multi-ply layup. That is, the current solution is to stack a number of discrete ceramic matrix composite plies on top of one another to achieve the desired properties.

### BRIEF SUMMARY

In one aspect, a ceramic matrix composite sandwich structure comprises a ceramic honeycomb core structure having oppositely-disposed first and second surfaces. A first face sheet is on the first surface of the ceramic honeycomb core structure. A second face sheet is on the second surface of the ceramic honeycomb core structure. The first face sheet and the second face sheet comprise a ceramic matrix composite.

In another aspect, a method of preparing a ceramic matrix composite sandwich structure comprises applying a first face sheet to a first surface of a honeycomb core structure and a second face sheet to a second surface of the ceramic honeycomb core structure to form a first unbonded ceramic structure. The first unbonded ceramic structure is subjected to an autoclave process comprising a temperature of about 200°F or greater and a pressure of about 100 psi or greater to form an intermediate bonded sandwich structure. The intermediate bonded sandwich structure is subjected to a sintering process comprising a temperature of about 2,000°F or greater to produce the ceramic matrix composite sandwich structure.

In another aspect, a method of preparing a ceramic matrix composite sandwich structure comprises applying a first face sheet to a first surface of a ceramic honeycomb core structure. The first face sheet is oriented to be on the bottom surface of the honeycomb core structure. The assembly is subjected to an autoclave process comprising a temperature about 200°F or greater and a pressure of about 100 psi or greater. A second face sheet is applied to a second surface of the ceramic honeycomb core structure. The second face sheet is oriented to be on the bottom surface of the honeycomb core structure. The assembly is subjected to an autoclave process comprising a temperature of about 200°F or greater and a pressure of about 100 psi or greater.

In another aspect, a method of preparing a ceramic matrix composite sandwich structure comprises infiltrating a paper core material with a preceramic composition to form a preceramic core structure. A first face sheet is applied to a first surface of the preceramic core structure, and a second face sheet is applied to a second surface of the preceramic core structure to form a first intermediate preceramic structure. The first intermediate preceramic structure is subjected to an autoclave process comprising a temperature of about 200°F or greater and a pressure of about 100 psi or greater to form a second intermediate preceramic structure. The second intermediate ceramic structure is subjected to a sintering process comprising a temperature of about 2,000°F or greater to produce the ceramic matrix composite sandwich structure.

Other objects and features will be in part apparent and in part pointed out hereinafter.

### BRIEF DESCRIPTION OF THE SEVERAL VIEWS OF THE DRAWING

Figure 1 is a fragmentary perspective of a ceramic matrix composite sandwich structure in accordance with the present disclosure.
Figure 2 is schematic illustration of a layup assembly for making the ceramic matrix composite sandwich structure of Figure 1.
Figure 3 is a flow chart with illustrations depicting a process for assembling the layup of Figure 2.
Figure 4A shows the structure of Example 1 after an autoclave process.
Figure 4B also shows the structure of Example 1 after the autoclave process.
Figure 4C shows the structure of Example 1 after a sintering process.
Figure 5A is a schematic illustration of a sintering process performed under pressure.
Figure 5B shows the structure of Example 2, which employed the sintering process under pressure, as depicted in Figure 5A, after the sintering process was completed.
Figure 6 is a flow chart illustrating a method of preparing a ceramic matrix composite sandwich structure involving a dedicated autoclave process for each face sheet.
Figure 7 shows the structure of Example 3, which employed the process of Figure 6, after the sintering process.
Figure 8A shows the application of a paste comprising a bulk molding compound, chopped ceramic fibers, and a ceramic matrix to a prepreg ceramic matrix composite face sheet.
Figure 8B shows the structure of Example 4, which employed the paste of Figure 8A, after the sintering process.
Figure 9A shows the application of ceramic adhesive to a prepreg ceramic matrix composite face sheet.
Figure 9B shows the structure of Example 5, which employed the ceramic adhesive of Figure 9A, after the sintering process.
Figure 10 is a flow chart illustrating another method of preparing a ceramic matrix composite sandwich structure involving a preceramic core structure.

Corresponding reference characters indicate corresponding parts throughout the drawings.

### DETAILED DESCRIPTION

The inventors have recognized that the formation of thick multi-ply ceramic matrix composite components has drawbacks. As the ceramic matrix composite mass becomes larger, the properties at various points within the mass may not remain uniform. For example, the density and thickness may differ between the center and edges of the ceramic matrix composite mass. Additionally, matrix material may become trapped within part of the composite mass such that it is not able to distribute evenly within the composite mass. Further, the cost of multi-ply ceramic matrix composite materials is significant. Finally, the resulting weight and geometry of the multi-ply ceramic matrix composite materials may be such that the end product is not suitable for certain applications.

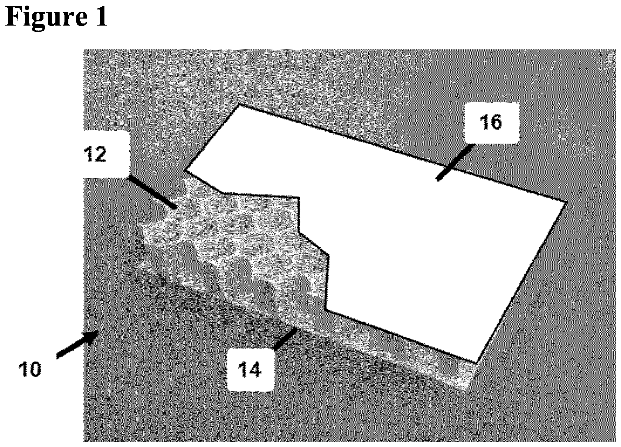

Referring to Figure 1, the present disclosure overcomes these issues by creating a ceramic matrix composite sandwich structure 10 in which a ceramic honeycomb core structure 12 is sandwiched between face sheets 14, 16 of ceramic matrix composite (i.e. laminates). In one embodiment, a ceramic honeycomb core structure 12 has oppositely-disposed first and second surfaces, the first surface has a first face sheet 14 thereon, the second surface has a second face sheet 16 thereon, and the first face sheet 14 and second face sheet 16 comprise a ceramic matrix composite (e.g., each face sheet can be a single ply of ceramic matrix composite material).

In some embodiments, the ceramic matrix composite sandwich structure 10 of the present disclosure is a structure which has certain material properties (e.g., temperature resistance, bending strength, and/or stiffness) similar to that of a multi-ply layup of ceramic matrix composite structures but is considerably lighter weight.

The present disclosure pertains generally to a ceramic matrix composite sandwich structure 10 comprising a ceramic honeycomb core structure 12. In one embodiment, the ceramic honeycomb core structure 12 is an oxide-oxide (Ox/Ox) ceramic material. For example, the ceramic honeycomb core structure 12 may be formed by taking a glass fiber core, infiltrating with a ceramic slurry and drying, and then sintering to yield a ceramic honeycomb core structure. In another embodiment, the ceramic honeycomb core structure 12 may be formed by taking a paper core, infiltrating with a ceramic slurry and drying, and then sintering to yield a ceramic honeycomb core structure.

In some embodiments, the ceramic honeycomb core structure 12 comprises a metal oxide selected from the group consisting of aluminum oxide (e.g., alumina), silicon oxide (e.g., silica), aluminum silicate (e.g., aluminum mullite), and combinations thereof.

In various embodiments, the ceramic honeycomb core structure 12 has a nominal cell size of about 15 mm or less, about 14 mm or less, about 13 mm or less, about 12 mm or less, about 11 mm or less, about 10 mm or less, about 9 mm or less, about 8 mm or less, about 7 mm or less, about 6 mm or less, about 5 mm or less, about 4.8 mm or less, about 4.6 mm or less, about 4.4 mm or less, about 4.2 mm or less, about 4.0 mm or less, about 3.8 mm or less, about 3.6 mm or less, about 3.4 mm or less, about 3.2 mm or less, about 3.0 mm or less, about 2.8 mm or less, about 2.6 mm or less, about 2.4 mm or less, about 2.2 mm or less, about 2.0 mm or less, or about 1.0 mm or less.

In other embodiments, the ceramic honeycomb core structure 12 has a density of about 50.0 lbs/ft³ or less, about 45.0 lbs/ft³ or less, about 40.0 lbs/ft³ or less, about 35.0 lbs/ft³ or less, about 30.0 lbs/ft³ or less, about 25.0 lbs/ft³ or less, about 20.0 lbs/ft³ or less, about 19.0 lbs/ft³ or less, about 18.0 lbs/ft³ or less, about 17.0 lbs/ft³ or less, about 16.0 lbs/ft³ or less, about 15.0 lbs/ft³ or less, about 14.0 lbs/ft³ or less, about 13.0 lbs/ft³ or less, about 12.0 lbs/ft³ or less, about 11.0 lbs/ft³ or less, or about 10.0 lbs/ft³ or less.

In some embodiments, the ceramic honeycomb core structure 12 has a temperature resistance of about 500°C or greater, about 600°C or greater, about 700°C or greater, about 800°C or greater, about 900°C or greater, about 1,000°C or greater, about 1,100°C or greater, or about 1,200°C or greater. For example, from about 500°C to about 1,200°C, from about 600°C to about 1,200°C, from about 700°C to about 1,200°C, from about 700°C to about 1,100°C, from about 700°C to about 1,000°C, or from about 700°C to about 900°C.

In certain embodiments, the ceramic honeycomb core structure 12 has a stabilized compression strength of about 200 psi or greater, about 300 psi or greater, about 400 psi or greater, about 500 psi or greater, about 600 psi or greater, about 700 psi or greater, about 800 psi or greater, about 900 psi or greater, about 1,000 psi or greater, about 1,100 psi or greater, about 1,200 psi or greater, about 1,300 psi or greater, about 1,400 psi or greater, about 1,500 psi or greater, about 1,600 psi or greater, about 1,700 psi or greater, about 1,800 psi or greater, about 1,900 psi or greater, about 2,000 psi or greater, about 4,000 psi or greater, about 6,000 psi or greater, about 8,000 psi or greater, or about 10,000 psi or greater.

The term "ceramic matrix composite" is used herein interchangeably to refer to both a ceramic matrix composite prepreg material (i.e. before the material has been subjected to sintering and still comprising a matrix system (e.g., solvents)) and a ceramic matrix composite material that has been subjected to autoclaving and/or sintering. The term "prepreg" refers to a fibrous material or a composite ply pre-impregnated with a resin, such as a ceramic matrix. The prepreg has solid particles (e.g., ceramic particles) in suspension within the matrix.

In some embodiments, each of the ceramic matrix composite face sheets 14, 16 comprises an oxide-oxide (Ox/Ox) ceramic matrix composite prepreg. As used herein prepreg is understood to comprise ceramic fibers held in a matrix material. An oxide-oxide (Ox/Ox) ceramic matrix composite prepreg is typically autoclaved and sintered by exposure to temperature and pressure to form a ceramic material.

In certain embodiments, the matrix component of the face sheets 14, 16 may comprise one or more of a solvent, metal oxide, resin, or other component. In one embodiment, the ceramic matrix composite may comprise an organic solvent. For example, an organic solvent selected from the group consisting of methanol, ethanol, butanol, n-propanol, i-propanol, and combinations thereof. In another embodiment, the matrix component of the face sheets 14, 16 may comprise a metal oxide selected from the group consisting of aluminum oxide (e.g., alumina, etc.), silicon oxide (e.g., silica), aluminum silicate (e.g., aluminum mullite), and combinations thereof.

In certain embodiments of the present disclosure, each ceramic matrix composite face sheet 14, 16 comprises a particulate-based ceramic matrix composite. For example, a ceramic matrix composite comprising ceramic fibers (e.g., 3M Nextel Ceramic Fibers). In one embodiment, the particulate-based ceramic matrix composite is formed by suspending ceramic particles in one or more solvents to create a slurry and infusing the slurry into a fabric comprising ceramic fibers. In one example, an aluminum-silicate slurry is used to form a ceramic matrix composite with Nextel 610 fabrics. In another example, an alumina slurry is used to form a ceramic matrix composite with Nextel 720 fabrics. In certain embodiments, the ceramic matrix composite comprises chopped ceramic fibers.

In one embodiment, one or both of the face sheets 14, 16 comprises an oxide-oxide (Ox/Ox) ceramic matrix composite prepreg that is an AX-7900-720 or AX-7810 solvent-based ceramic matrix composite prepreg (commercially available from Axiom Materials).

In various embodiments, the ceramic matrix composite face sheets 14, 16 are devoid of sol gel-based ceramic matrix composite. In another embodiment, the entire sandwich structure 10 is devoid of a sol gel-derived ceramic matrix composite.

Methods for preparing a ceramic matrix composite sandwich structure 10 generally comprise applying a first face sheet 14 to a first surface of a honeycomb core structure 12, applying a second face sheet 16 to a second surface of the ceramic honeycomb core structure 12, bonding the face sheets to the honeycomb core structure in an initial autoclave process to form an intermediate bonded sandwich structure (which is not yet fully ceramic), and sintering the intermediate bonded sandwich structure to form the intermediate bonded sandwich structure into a ceramic matrix composite sandwich structure. In certain embodiments, the first surface is the top surface of the honeycomb core structure 12. In other embodiments, the first surface is the bottom surface of the honeycomb core structure 12. In certain embodiments, the second surface is the top surface of the honeycomb core structure 12. In other embodiments, the second surface is the bottom surface of the honeycomb core structure 12.

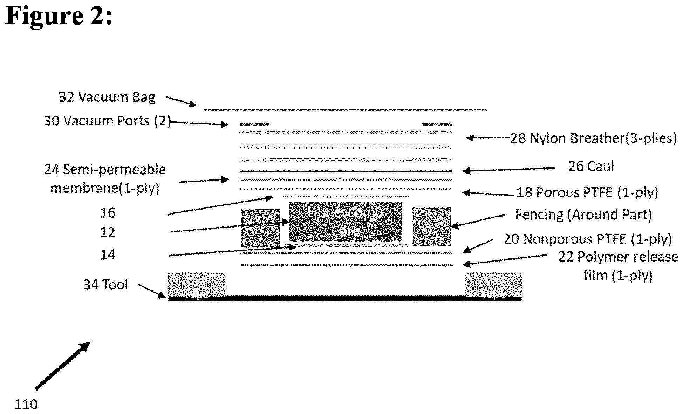

Figure 2 shows an exemplary layup assembly 110 comprising the ceramic matrix composite sandwich structure. The layup assembly 110 includes the honeycomb core structure 12, the face sheets 14, 16, and additional ceramic matrix composite layup components similar to those described in US Patent Application No. 18/325,835. US Patent Application No. 18/325,835contemplated forming thick ceramic composite matrix structures by stacking multiple prepreg plies on top of one another in the layup process. In one aspect, this disclosure contemplates utilizing similar tooling and consumable components in the process for making the ceramic matrix composite sandwich structure described above.

Figure 2 depicts the components of an exemplary layup assembly 110 for forming a ceramic matrix composite sandwich structure in accordance with one or more embodiments herein. Specifically, the layup assembly 110 includes a rigid tool 34, one or more layers and/or types of release film 20, 22 stacked thereon, followed by the face sheet 14, honeycomb core 12, face sheet 16, a porous Teflon (PTFE) sheet 18, the semi-permeable membrane 24, three plies of a breather 28, and a vacuum bag 32. In certain embodiments, the layup assembly may comprise vacuum port(s) 30. However, other embodiments may have different ordering of layers described herein, may include more or less layers than depicted, and/or the release film 20, 22, 18, and/or the breather 28 may be omitted without departing from the scope of the invention.

The rigid tool 34 may be any rigid, impermeable surface sized and configured for shaping at least one surface of the ceramic matrix composite sandwich structure 10. For example, the rigid tool 34 can be made of aluminum and can be a planar surface or a surface with simple or complex curvature. In some embodiments, the rigid tool 34 can have a complex geometry suitable for forming a composite part having closed geometries or one or more closed shapes.

In one embodiment, the release film 20 and 22 may be the same or different. The release film can be any substance or material sufficient to prevent sticking of one layer to another layer, such as between the face sheets 14, 16 and the rigid tooling 34. Examples of release film may include fluoropolymer, a non-porous polytetrafluoroethylene ply, a porous polytetrafluoroethylene ply, and/or a polytetrafluoroethylene coated fiberglass sheet. Additionally or alternatively, the release film described herein may be release coatings, such as liquid coatings that solidify once applied to a surface. These release coatings may include, for example, fluoropolymers or silicone polymers (e.g., polysilazane). However, any release film that has a slip plane and/or gives a nicer surface finish to the resulting composite part can be used without departing from the scope of the invention described herein. One or more embodiments herein may even omit the release film or one or more layers of the release film. In other embodiments, release film 20 may be a nonporous Teflon (PTFE) sheet.

In various embodiments, the semi-permeable membrane 24 may be a DAHLTEXX-SP3 membrane manufactured by Airtech International Inc. headquartered in Huntington Beach, California. However, other semi-permeable membranes 24 may be used without departing from the scope of the invention described herein, as long as they are suitable for the autoclave process described herein. For example, alternative semi-permeable membranes are applicable if they are autoclave compatible up to approximately 100 psi and temperature compatible up to approximately 350°F.

The breather 28 may be positioned over the semi-permeable membrane 24 and may include one, two, three, or more plies of a fabric designed to allow airflow throughout the vacuum bagging and curing process. For example, the breather 28 may include a non-woven polyester felt breather fabric. In certain embodiments, the breather 28 may be a nylon breather. However, other breather fabrics known in the art may be used without departing from the scope of the invention. Furthermore, some embodiments may omit the breather 28 entirely or supplement or replace the breather 28 with another release film.

In certain embodiments, the vacuum bag 32 is positioned over the components stacked on the rigid tooling 34 and is sealed therearound and/or sealed against the rigid tooling 34, forming a periphery around the components stacked on the rigid tooling 34. Specifically, the vacuum bag 32 may be a flexible, impermeable material such as nylon, mylar or polyethylene, for example. The vacuum bag 32 may, in one or more embodiments, have a vacuum port formed therethrough, or a vacuum port may be formed through the rigid tooling 34. However, other methods of introducing a pressure differential to act on the vacuum bag 32 may be used without departing from the scope of the invention. A pressure differential may be introduced via the vacuum port or otherwise in order to urge the vacuum bag 32 toward the rigid tooling 34. This urging of the vacuum bag 32 toward the rigid tooling 34 thus compresses the honeycomb core 12 and the semi-permeable membrane 24 during curing as described below.

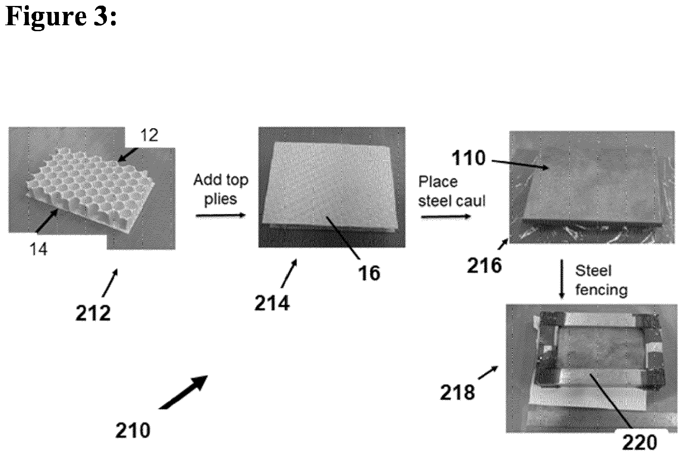

Referring to Figure 3, an exemplary layup process for the composite sandwich structure 10 is generally indicated at reference number 210. At step 212, the honeycomb core structure 12 is positioned atop a first face sheet 14, and at step 214, the second face sheet 16 is positioned atop the honeycomb core structure. The ceramic composite matrix materials are then loaded into the tooling and vacuum bagged to assemble the layup assembly 110, as indicated at step 216. At step 218, steel fencing 220 is installed around the layup assembly 110, yielding a final assembly that is ready for exposure to an autoclave process. It is believed that the honeycomb core structure of the ceramic matrix composite sandwich structure may be susceptible to the increased pressure of the autoclave/sintering processes. Therefore, reinforcing materials such as the steel fencing shown in Figure 3 may be used to reduce the direct pressure exerted on the honeycomb core structure during autoclave bonding or sintering.

In certain embodiments, the autoclave process may comprise temperatures of about 200°F or greater, about 250°F or greater, about 300°F or greater, about 350°F or greater, or about 400°F or greater. The autoclave process may also comprise pressures of about 15 psi or greater, about 20 psi or greater, about 25 psi or greater, about 50 psi or greater, about 75 psi or greater, about 100 psi or greater, about 150 psi or greater, about 200 psi or greater, about 250 psi or greater, or about 300 psi or greater. For example, from about 15 psi to about 300 psi, from about 20 psi to about 250 psi, or from about 25 psi to about 200 psi. In one embodiment, the autoclave process may comprise subjecting the structure to a temperature of about 200°F or greater and a pressure of about 100 psi or greater. In another embodiment, the autoclave process may comprise subjecting the structure to a temperature of about 300°F or greater and a pressure of about 100 psi or greater. The autoclave process may be conducted, for example, for about 30 minutes or greater, about 1 hour or greater, about 2 hours or greater, about 3 hours or greater, about 4 hours or greater, or about 5 hours or greater. In certain embodiments, the autoclave process may comprise multiple heat/pressure levels. For example, in one embodiment, the autoclave process comprises subjecting the structure to a temperature of about 250°F for about 1 hour, followed by a temperature of about 350°F for about 1 hour.

In further embodiments, the autoclave process may be conducted in a system held under a vacuum. For example, a system from about 20 to about 27 in. Hg.

The autoclave bonding process creates initial bonds between the honeycomb core structure 12 and the face sheets 14, 16, evaporates off solvents that may be present in the material, and/or initiates crosslinking chemistry operations. The result of the autoclave process is a solid sandwich composite material (the intermediate bonded sandwich structure), but not fully ceramic. For example, non-ceramic components of the face sheet matrix material will remain after the autoclave process.

To complete the ceramic matrix composite sandwich structure, the intermediate bonded sandwich structure is removed from the tooling and subjected to a sintering process. In certain embodiments, the sintering process is conducted at a temperature of about 1,500°F or greater, about 1,750°F or greater, about 2,000°F or greater, about 2,250°F or greater, about 2,500°F or greater, about 2,750 °F or greater, or about 3,000°F or greater. The sintering process may be conducted, for example, for about 30 minutes or greater, about 1 hour or greater, about 2 hours or greater, about 3 hours or greater, about 4 hours or greater, about 5 hours or greater, about 6 hours or greater, about 7 hours or greater, about 8 hours or greater, about 9 hours or greater, or about 10 hours or greater. For example, in one embodiment, the sintering process comprises subjecting the material to a temperature of about 2,000°F for about 6 hours.

Accordingly, it can be seen that one method of the present disclosure is directed to preparing a ceramic matrix composite sandwich structure 10. The method comprises: applying a first face sheet 14 to a first surface of a honeycomb core structure 12 and a second face sheet 16 to a second surface of the ceramic honeycomb core structure to form a first unbonded sandwich structure; subjecting the first unbonded ceramic structure to an autoclave process comprising a temperature of about 200°F or greater and a pressure of about 100 psi or greater to form an intermediate bonded sandwich structure; and subjecting the intermediate bonded sandwich structure to a sintering process comprising a temperature of about 2,000°F or greater to produce the ceramic matrix composite sandwich structure.

The inventors have discovered that, even when the process above is employed properly, the face sheets 14, 16 (i.e. first face sheet and/or second face sheet) may not fully bond to the honeycomb core structure 12 due to a CTE (coefficient of thermal expansion) mismatch between the honeycomb core structure and the face sheet. Additionally, the face sheets 14, 16 have been observed in certain embodiments to shrink during the sintering process. This may result in a final ceramic matrix composite sandwich structure 10 wherein the honeycomb core structure and face sheets are not adequately bonded (e.g., there may be gaps between the surfaces of the honeycomb core structure 12 and one or both of the face sheets 14, 16). As explained more fully below, the inventors have devised certain improved methods to overcome the CTE (coefficient of thermal expansion) mismatch between the honeycomb core structure and the face sheet and result in an improved ceramic matrix composite sandwich structure.

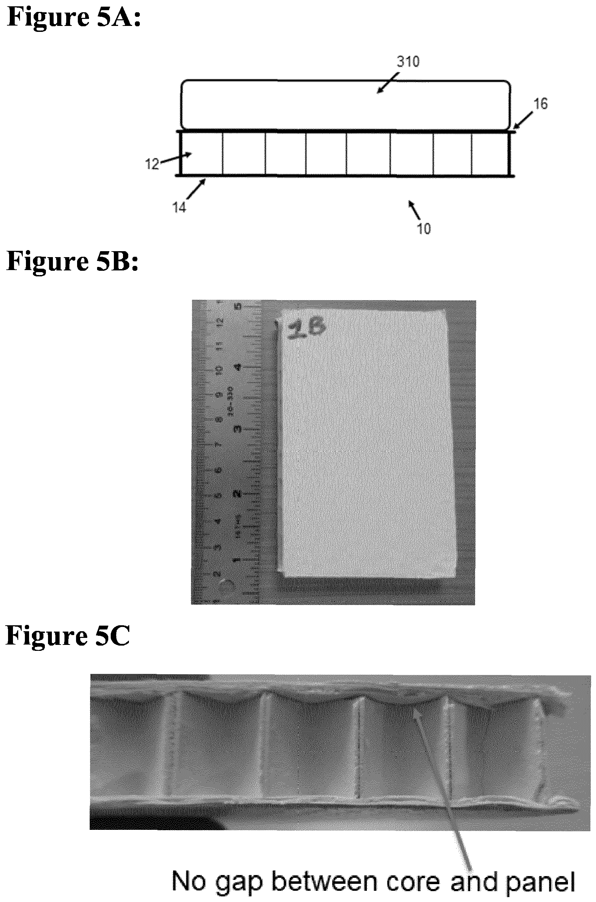

Referring to FIG. 5A, an exemplary method for forming the ceramic matrix composite sandwich structure comprises applying pressure to the first face 14 sheet and/or second face sheet 16 during the sintering process. In one embodiment, the first face sheet 14 is oriented to the top of the ceramic matrix composite sandwich structure and a pressure (e.g., a weight 310) is applied to the first face sheet during sintering. In one embodiment, the second face sheet 16 is oriented to the top of the ceramic matrix composite sandwich structure and a pressure is applied (via weight 310) to the second face sheet during sintering. In other embodiments, pressure is applied to both the first face sheet 14 and the second face sheet 16 during sintering (e.g., using a press). For example, certain embodiments are directed to applying a pressure of about 0.05 psi, 0.1 psi, 0.125 psi, 0.15 psi, 0.175 psi, 0.2 psi, 0.4 psi, 0.6 psi, 0.8 psi, 1.0 psi, 2.0 psi, 3.0 psi, 4.0 psi, or 5.0 psi or greater to the first face sheet 14 and/or second face sheet 16 during sintering.

It is believed that applying pressure to the first and/or second face sheet 14, 16 during the sintering process minimizes the effects of CTE mismatch between the core structure 12 and the face sheet(s) 14, 16 and yields substantial improvements in the bonds between the face sheets 14, 16 and the honeycomb core structure.

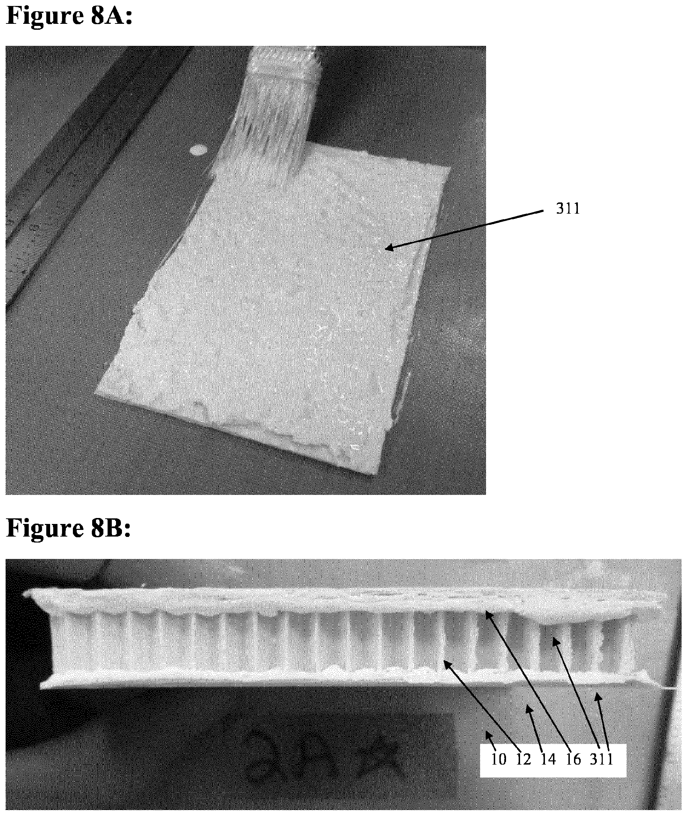

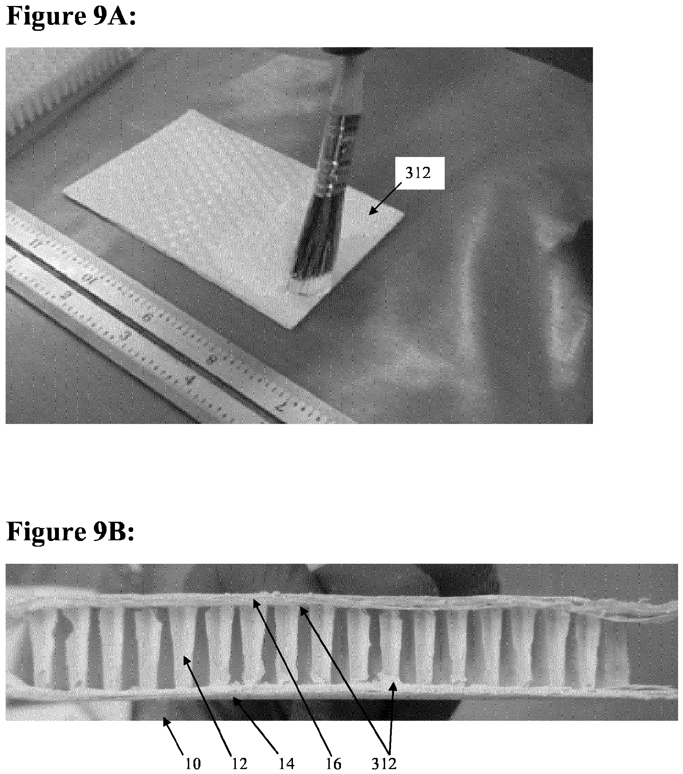

Other embodiments of the present disclosure are directed to the method of preparing a ceramic matrix composite sandwich structure wherein a bonding composition is applied the first face sheet 14, and/or second face sheet 16 prior to applying the first face sheet and second face sheet to the ceramic honeycomb core structure 12. Example 4 (FIGS. 8A-8B) and Example 5 (FIGS. 9A-8B) below pertain to such methods. As shown in FIGS. 8A-8B and 9A-9B, a bonding compound 311, 312 may applied by brush to the inner surface of one or both face sheets 14, 16 before the face sheets are applied to the honeycomb core structure 12 and cured.

As shown in FIGS. 8A-8B, in one embodiment, the bonding composition 311 comprises a bulk molding compound. For example, the bulk molding compound used in the bonding composition 311 may comprise a silicone resin. In a specific embodiment, the bulk molding compound used in the bonding composition 311 comprises AX-8900BMC-CM (commercially available from Axiom Materials). The bonding composition 311 further comprises chopped ceramic fibers. In certain embodiments, the bonding composition further comprises uncured ceramic matrix material of the same or similar type to that used in the prepreg forming the face sheets 14, 16. Hence, in an exemplary embodiment, the bonding composition 311 comprising a paste formed from bulk molding compound, chopped ceramic fibers, and ceramic matrix material. In certain embodiments, the bonding composition comprises about 40 wt% or less, about 35 wt% or less, about 30 wt% or less, about 25 wt% or less, or about 20 wt% or less of bulk molding compound.

Although bulk molding compounds are not typically used for adhesion, it has been discovered that certain compositions comprising bulk molding compounds may improve the bonding between the honeycomb core structure 12 and the face sheets 14, 16 (i.e. ceramic matrix composite layer). In specific embodiments where the bonding composition comprises a bulk molding compound and a ceramic matrix component of a ceramic matrix composite, it has been discovered that the bulk molding compound (typically in a solid or semi-solid form) and the ceramic matrix component (typically in a liquid or semi-liquid form) mix well to produce a paste suitable for application to the face sheets 14, 16 and result in an acceptable ceramic matrix composite sandwich structure.

Referring to FIGS. 9A and B, in additional embodiments of the present disclosure, the bonding composition 312 may comprise a ceramic adhesive. For example, a ceramic adhesive comprises aluminum oxide, silicon oxide, and/or aluminum silicate (e.g., aluminum mullite). In one specific embodiment, the ceramic adhesive comprises Ceramabond 503 (an inorganic, water-dispersed, aluminum oxide (alumina) filled adhesive commercially available from Aremco Product Inc.).

Although ceramic adhesives are typically used to bond a ceramic material to a ceramic material, it has been surprisingly discovered that a ceramic adhesive may be used to ensure adequate adhesion between a ceramic core material and a prepreg (i.e. ceramic matrix composite prepreg) prior to autoclaving and sintering.

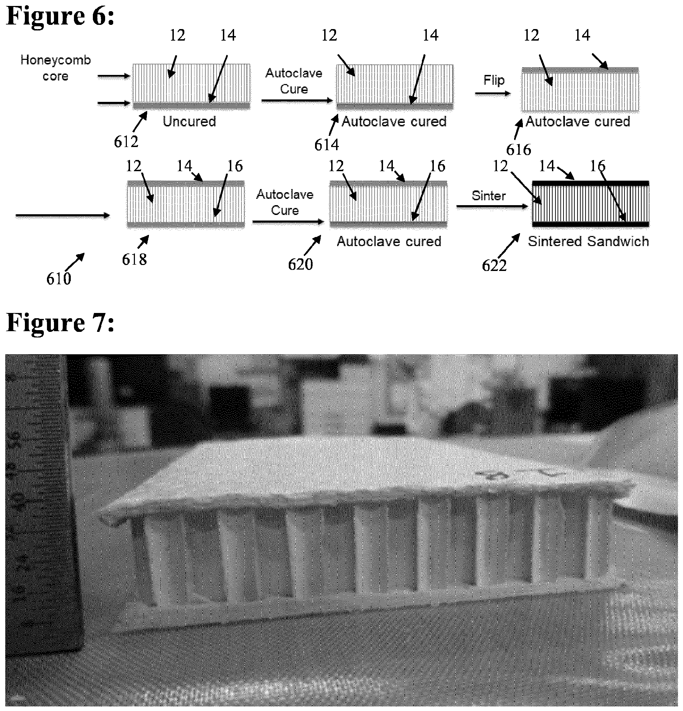

Referring to FIG. 6, another exemplary method of preparing a ceramic matrix composite sandwich structure 10 in accordance with the present disclosure is generally indicated at reference number 610. The method 610 differs from the processes described above in that the intermediate bonded sandwich structure is formed in two autoclave curing steps. Initially, at step 612, a first face sheet 14 is applied to a first surface of a ceramic honeycomb core structure 12and positioned on the bottom surface of the honeycomb core structure. In step 614, this subassembly is subjected to an autoclave process comprising a temperature of about 200°F or greater and a pressure of about 100 psi or greater to create an intermediate bonded partial sandwich structure (the first face sheet remains on bottom during the autoclave process). At step 616, the intermediate bonded partial sandwich structure is inverted, and at step 618, placed atop a second (prepreg) face sheet 16 so that the second face sheet is applied to the second surface of the ceramic honeycomb core structure 12 on the bottom of the honeycomb core structure. At step 620, this assembly is subjected to an autoclave process comprising a temperature of about 200°F or greater and a pressure of about 100 psi or greater (while the second face sheet 16 remains on bottom) to create the intermediate bonded sandwich structure. Finally, in step 622 the intermediate bonded sandwich structure is subjected to a sintering process comprising a temperature of about 2,000°F or greater to produce the ceramic matrix composite sandwich structure 10. Pressure (via weight 310) may be applied during the sintering process 622 if desired.

Similar to the above-described method comprising the application of pressure (FIG. 5A), it is believed that sequential autoclaving of the bottom face sheet allows the weight of the honeycomb core structure 12 to exert pressure on the bottom face sheet during the autoclave process. By conducting a two-step autoclave process, wherein a new bottom layer is autoclaved in each step, it is possible to improve the adherence of the face sheets to the honeycomb core structure in the final sintered ceramic matrix composite sandwich structure. This may be particularly important when pressure is not able to be directly applied to the ceramic matrix composite sandwich structure (e.g., when it has irregular shape or structure).

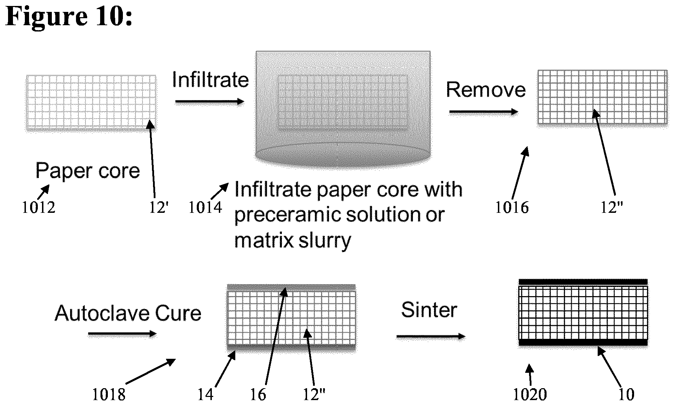

Referring to FIG. 10, another embodiment of a method of preparing a ceramic matrix composite sandwich structure in accordance with the present disclosure is generally indicated at reference number 1010. In each of the methods described above, the honeycomb core structure 12 is a prefabricated to be a fully sintered ceramic structure before the face sheets 14, 16 are applied to the surfaces of the honeycomb core structure. But in the method 1010, the honeycomb core structure 12 and the face sheets 14, 16 are sintered together (transitioning at the same time from preceramic to ceramic) in the same sintering process. The method 1010 begins at step 1012 by forming a sacrificial honeycomb core structure 12' (e.g., a paper or glass fiber honeycomb core structure). Subsequently, at step 1014, the sacrificial core structure 12' is infiltrated with a preceramic composition to form a preceramic honeycomb core structure 12". At step 1016. the preceramic honeycomb core structure 12" is removed from the slurry composition. At step 1018, the first and second face sheets 14, 16 are applied to the preceramic core structure and subjected to an autoclave process comprising a temperature of about 200°F or greater and a pressure of about 100 psi or greater. The autoclave process cures the prepreg sheets 14, 16 and the preceramic core structure 12" to form an intermediate bonded sandwich structure that is made of preceramic material. Finally, at step 1020 the intermediate bonded sandwich structure is subjected to a sintering process comprising a temperature of about 2,000°F or greater to produce the ceramic matrix composite sandwich structure 10.

Although the material for the sacrificial core 12' may be shaped to have a honeycomb configuration, the sacrificial core material may alternatively be in any other suitable shape or orientation. The sacrificial core material may be any material suitable for infiltration, autoclave bonding, and sintering. For example, the core material may comprise paper or glass.

The infiltration of the sacrificial core 12' may be conducted using a sol-gel preceramic solution, a matrix slurry (i.e. ceramic particles in solution), or combinations thereof. In one embodiment, the core material is infiltrated with a matrix slurry. In another embodiment, the core material is not infiltrated with a sol-gel preceramic solution.

It is believed that the infiltration of a sacrificial core 12' to form a (preceramic) core structure 12", and application of first face sheet and second face sheet layers to the preceramic core structure, prior to the autoclave and sintering processes, allows for enhanced bonding between the core structure and face sheets than if the core material was already in the form of a ceramic when bonded with the face sheets.

Having described certain exemplary embodiments in detail, it will be apparent that modifications and variations are possible without departing from the scope of the appended claims.

### EXAMPLES

The following non-limiting examples are provided to further illustrate exemplary principles of the present disclosure.

### Example 1:

An experiment was conducted to evaluate the results of utilizing a ceramic honeycomb core structure having oppositely-disposed first and second surfaces, wherein the first surface has a first face sheet thereon and the second surface has a second face sheet thereon. The first face sheet and second face sheet were a ceramic matrix composite prepreg (AX-7900).

The process for assembling the layup comprised positioning AX 7900 face sheets on the top and bottom surfaces of the honeycomb core material 12 in the layup assembly 110 described above and installing steel fencing 220 around the layup assembly to protect the material from the pressure of subsequent steps. The layup comprising the steel fencing was subjected to an autoclave process of 250°F for 1 hour at 100 psi, followed by 350°F for 1 hour at 200 psi to produce an intermediate bonded sandwich structure. During the autoclave process, a vacuum was pulled inside of the layup assembly 110 at about 20 to about 27 in. Hg. The intermediate bonded sandwich structure was then subjected to sintering at 2000°F for 6 hours to produce a ceramic matrix composite sandwich structure.

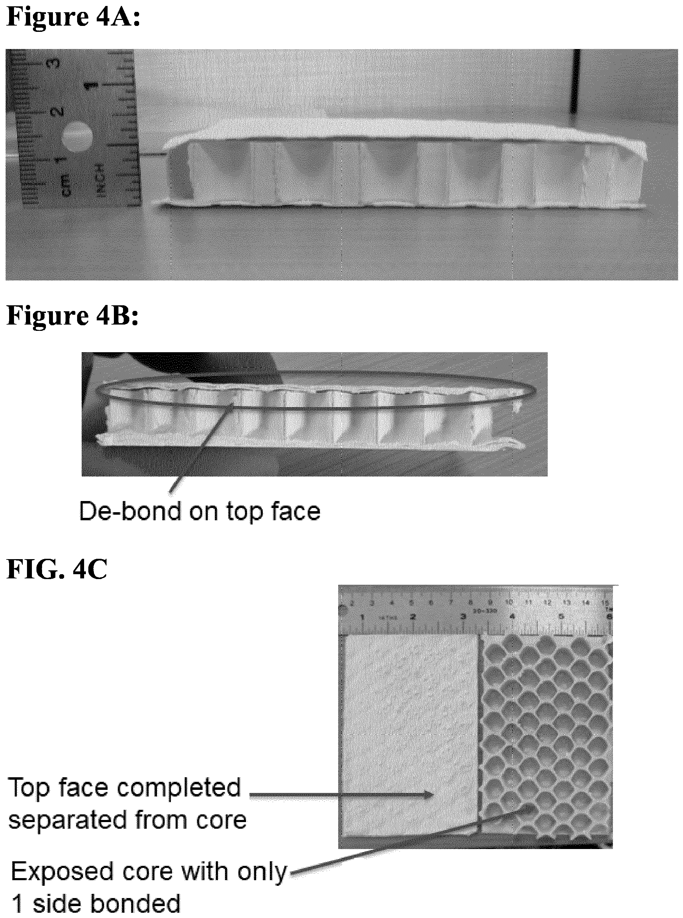

Figure 4A shows the intermediate bonded sandwich structure after the autoclave process and Figures 4B and 4C shows the ceramic matrix composite sandwich structure after the sintering process.

After the autoclave process (FIG. 4B), the majority of the ceramic matrix composite face sheets 14, 16 were bonded to the honeycomb core structure 12. However, there was some observed locations of debonding.

After the sintering process (FIG. 4C), the top ceramic matrix composite layer 16 completely separated from the honeycomb core structure.

### Example 2:

A further experiment was conducted to apply pressure to the structure during sintering. The same layup schematic (i.e. honeycomb core structure and ceramic matrix composite face sheets) was utilized as in Example 1.

After the autoclave process, a light pressure of about 0.174 psi was applied to the top of the intermediate bonded sandwich structure (using weight 310 shown schematically in Figure 5A) during the sintering process. The result of this sintering process is shown in Figures 5B and 5C. The top ceramic matrix composite layer 16 exhibited improved bond retention to the honeycomb core structure 12 as compared to Example 1. No gap was observed between the core structure and the top ceramic matrix composite layer.

Without being bound by the theory, it is believed that the pressure applied to the top of the intermediate bonded sandwich structure minimized the effects of CTE (coefficient of thermal expansion) mismatch between the core structure 12 and the top ceramic matrix composite layer 16.

### Example 3:

A further experiment was conducted to modify the autoclave and sintering processes.

The process of Example 3 followed the steps of method 610 illustrated in Figure 6. The conditions of the autoclave and sintering processes were as described in Example 1.

In this process, the ceramic matrix composite (AX-7900 prepreg) layers 14, 16 were added to the bottom of the honeycomb core structure 12 sequentially. In a first step, a ceramic matrix composite (AX-7900 prepreg) 14 was supplied on the bottom surface of a honeycomb core structure 12 and subjected to an autoclave process. The structure was then flipped such that the previously applied face sheet 14 was now positioned at the top surface of the honeycomb core structure 12. A second ceramic matrix composite (AX-7900 prepreg) 16 was then supplied to the bottom surface of the honeycomb core structure 12 and subjected to an autoclave process. The resulting structure of this step was an intermediate bonded sandwich structure having a ceramic matrix composite (AX-7900 prepreg) layer disposed on both the top and bottom surface of the core structure. This structure was then subjected to a sintering process.

The results of the sintering process are shown in Figure 7.

The sintered structure had good bonding between the core structure and ceramic matrix composite layers and did not exhibit any observable gaps.

Without being bound by the theory, it is believed that sequential autoclaving of the bottom layers allowed for the weight of the honeycomb core structure 12 to ensure adequate bonding to the ceramic matrix composite layer 14, 16. This is believed to be particularly important for structures where it is not practical or feasible to operate as in Example 2 and directly apply pressure to the structure (e.g., in the instance of non-uniform shapes or structures).

### Example 4:

An additional experiment was conducted utilizing the paste 312 formed from bulk molding compound, chopped ceramic fibers, and a ceramic matrix composite as an adhesive for the honeycomb core structure 12 and ceramic matrix composite (AX-7900 prepreg) layers 14, 16.

The paste 312 was prepared to having 30 wt% bulk molding compound (particularly, AX-8900BMC-CM, commercially available from Axiom Materials). The bulk molding compound was mixed with 3MTM NextelTM chopped ceramic fibers and a solvent-based ceramic matrix. to form the paste 311.

The paste 311 was applied to the ceramic matrix composite (AX-7900 prepreg) layers 14, 16 as shown in Figure 8A and the layers were then applied to the honeycomb core structure 12 such that the solution contacted the core structure.

The resulting ceramic matrix composite sandwich structure after autoclave and sintering is shown in Figure 8B. The sintered structure had good bonding between the core structure and ceramic matrix composite layers and did not exhibit any observable gaps.

### Example 5:

A further experiment was conducted utilizing a ceramic adhesive 312 as an adhesive for the honeycomb core structure 12 and ceramic matrix composite (AX-7900 prepreg) layers 14, 16.

Ceramabond 503 (commercially available from Aremco) was applied to the ceramic matrix composite (AX-7900 prepreg) layers 14, 16 as shown in Figure 9A and the layers were then applied to the honeycomb core structure 12 such that the solution contacted the core structure.

The resulting ceramic matrix composite sandwich structure after autoclave and sintering is shown in Figure 9B. The sintered structure had good bonding between the core structure and ceramic matrix composite layers and did not exhibit any observable gaps.

### Example 6:

A process for preparing a ceramic matrix composite sandwich structure was devised and followed the process set forth in Figure 10.

A paper core material (e.g., a honeycomb paper structure) is infiltrated with a preceramic solution (sol-gel) or matrix slurry (ceramic particles in solution) to produce a preceramic core. The preceramic core is then assembled as explained in previous examples with a top and bottom prepreg layer (e.g., a ceramic matrix composite (AX-7900 prepreg)) and subjected to an autoclave process. The autoclaved structure is then sintered to convert the materials into a ceramic.

When introducing elements of the preferred embodiments, the articles "a", "an", "the" and "said" are intended to mean that there are one or more of the elements. The terms "comprising", "including" and "having" are intended to be inclusive and mean that there may be additional elements other than the listed elements.

In view of the above, it will be seen that the several objects of the disclosure are achieved and other advantageous results attained.

As various changes could be made in the above constructions, products, and methods without departing from the scope of the disclosure, it is intended that all matter contained in the above description and shown in the accompanying drawings shall be interpreted as illustrative and not in a limiting sense.

## Claims

1. A ceramic matrix composite sandwich structure comprising:
a ceramic honeycomb core structure having oppositely-disposed first and second surfaces,
a first face sheet on the first surface of the ceramic honeycomb core structure; and
a second face sheet on the second surface of the ceramic honeycomb core structure;
wherein the first face sheet and second face sheet comprise a ceramic matrix composite.

2. The ceramic structure of claim 1, wherein the ceramic honeycomb core structure is an oxide-oxide (Ox/Ox) ceramic material.

3. The ceramic matrix composite sandwich structure of claim 1 or 2, wherein the ceramic honeycomb core structure has a nominal cell size of about 15 mm or less, about 14 mm or less, about 13 mm or less, about 12 mm or less, about 11 mm or less, about 10 mm or less, about 9 mm or less, about 8 mm or less, about 7 mm or less, about 6 mm or less, about 5 mm or less, about 4.8 mm or less, about 4.6 mm or less, about 4.4 mm or less, about 4.2 mm or less, about 4.0 mm or less, about 3.8 mm or less, about 3.6 mm or less, about 3.4 mm or less, about 3.2 mm or less, about 3.0 mm or less, about 2.8 mm or less, about 2.6 mm or less, about 2.4 mm or less, about 2.2 mm or less, about 2.0 mm or less, or about 1.0 mm or less.

4. The ceramic matrix composite sandwich structure of any preceding claim, wherein the ceramic honeycomb core structure has a density of about 50.0 lbs/ft³ or less, about 45.0 lbs/ft³ or less, about 40.0 lbs/ft³ or less, about 35.0 lbs/ft³ or less, about 30.0 lbs/ft³ or less, about 25.0 lbs/ft³ or less, about 20.0 lbs/ft³ or less, about 19.0 lbs/ft³ or less, about 18.0 lbs/ft³ or less, about 17.0 lbs/ft³ or less, about 16.0 lbs/ft³ or less, about 15.0 lbs/ft³ or less, about 14.0 lbs/ft³ or less, about 13.0 lbs/ft³ or less, about 12.0 lbs/ft³ or less, about 11.0 lbs/ft³ or less, or about 10.0 lbs/ft³ or less.

5. The ceramic matrix composite sandwich structure of any preceding claim, wherein the ceramic honeycomb core structure has a stabilized compression strength of about 200 psi or greater, about 300 psi or greater, about 400 psi or greater, about 500 psi or greater, about 600 psi or greater, about 700 psi or greater, about 800 psi or greater, about 900 psi or greater, about 1,000 psi or greater, about 1,100 psi or greater, about 1,200 psi or greater, about 1,300 psi or greater, about 1,400 psi or greater, about 1,500 psi or greater, about 1,600 psi or greater, about 1,700 psi or greater, about 1,800 psi or greater, about 1,900 psi or greater, about 2,000 psi or greater, about 4,000 psi or greater, about 6,000 psi or greater, about 8,000 psi or greater, or about 10,000 psi or greater.

6. The ceramic matrix composite sandwich structure of any preceding claim, wherein the ceramic matrix composite comprises a sintered oxide-oxide (Ox/Ox) ceramic matrix composite prepreg.

7. A method of preparing a ceramic matrix composite sandwich structure, comprising:
applying a first face sheet to a first surface of a honeycomb core structure and a second face sheet to a second surface of the ceramic honeycomb core structure to form a first unbonded ceramic structure;
subjecting the first unbonded ceramic structure to an autoclave process comprising a temperature of about 200°F or greater and a pressure of about 100 psi or greater to form an intermediate bonded sandwich structure; and
subjecting the intermediate bonded sandwich structure to a sintering process comprising a temperature of about 2,000°F or greater to produce the ceramic matrix composite sandwich structure.

8. The method of claim 7, wherein, a pressure of about 0.05 psi, 0.1 psi, 0.125 psi, 0.15 psi, 0.175 psi, 0.2 psi, 0.4 psi, 0.6 psi, 0.8 psi, 1.0 psi, 2.0 psi, 3.0 psi, 4.0 psi, or 5.0 psi or greater is applied to the first face sheet during the sintering process.

9. The method of claim 7 or 8, further comprising applying a bonding composition to the first face sheet and/or second face sheet prior to applying the first face sheet and second face sheet to the ceramic honeycomb core structure.

10. The method of claim 9, wherein the bonding composition comprises a bulk molding compound; or
wherein the bonding composition comprises a paste formed from bulk molding compound, chopped ceramic fibers, and a ceramic matrix composite, optionally about 40 wt% or less, about 35 wt% or less, about 30 wt% or less, about 25 wt% or less, or about 20 wt% or less of the bulk molding compound.

11. The method of claim 9 or 10, wherein the bonding composition comprises AX-8900BMC-CM, or wherein the bonding composition comprises a ceramic adhesive such as an inorganic, water-dispersed, aluminum oxide (alumina) filled adhesive.

12. The method of any preceding claim, wherein each of the first face sheet and the second face sheet comprises an oxide-oxide (Ox/Ox) ceramic matrix composite prepreg.

13. The method of claim 12, wherein the oxide-oxide (Ox/Ox) ceramic matrix composite prepreg comprises an organic solvent selected from the group consisting of methanol, ethanol, butanol, n-propanol, i-propanol, and combinations thereof; and/or wherein the oxide-oxide (Ox/Ox) ceramic matrix composite prepreg comprises a metal oxide selected from the group consisting of aluminum oxide (e.g., alumina), silicon oxide (e.g., silica), aluminum silicate (e.g., aluminum mullite), and combinations thereof.

14. The method of claim 13, wherein applying the first face sheet and second face sheet and subjecting the first unbonded ceramic structure to an autoclave process comprises:
applying a first face sheet to a first surface of a ceramic honeycomb core structure, orienting the first face sheet to be on the bottom surface of the honeycomb core structure, and subjecting the assembly to an autoclave process comprising a temperature about 200°F or greater and a pressure of about 100 psi or greater; and
applying a second face sheet to a second surface of the ceramic honeycomb core structure, orienting the second face sheet to be on the bottom surface of the honeycomb core structure, and subjecting the assembly to an autoclave process comprising a temperature of about 200°F or greater and a pressure of about 100 psi or greater.

15. A method of preparing a ceramic matrix composite sandwich structure, comprising:
infiltrating a paper core material with a preceramic composition to form a preceramic core structure;
applying a first face sheet to a first surface of the preceramic core structure and a second face sheet to a second surface of the preceramic core structure to form a first intermediate preceramic structure;
subjecting the first intermediate preceramic structure to an autoclave process comprising a temperature of about 200°F or greater and a pressure of about 100 psi or greater to form a second intermediate preceramic structure; and
subjecting the second intermediate ceramic structure to a sintering process comprising a temperature of about 2,000°F or greater to produce the ceramic matrix composite sandwich structure.
